# EUROPÄISCHE PATENTSCHRIFT

(11) **EP 3 707 480 B1**
(45) Veröffentlichungstag und Bekanntmachung des Hinweises auf die Patenterteilung: **25.08.2021**
(21) Anmeldenummer: 18778400.4
(22) Anmeldetag: 17.09.2018
(51) Int. Cl.: G01D 21/02

(54) **VERFAHREN ZUR ORTSAUFGELÖSTEN BESTIMMUNG VON ZUMINDEST EINER PHYSIKALISCHEN ODER CHEMISCHEN PROZESSGRÖSSE**
METHOD FOR SPATIALLY RESOLVED DETERMINATION OF AT LEAST ONE PHYSICAL OR CHEMICAL PROCESS VARIABLE
PROCÉDÉ PERMETTANT LA DÉTERMINATION, DÉCLENCHÉE SELON L'EMPLACEMENT, D'AU MOINS UNE GRANDEUR DE PROCESSUS PHYSIQUE OU CHIMIQUE

(30) Priorität: 08.11.2017 DE 102017126128
(43) Veröffentlichungstag der Anmeldung: 16.09.2020
(73) Patentinhaber: Endress+Hauser SE+Co. KG, 79689 Maulburg (DE)
(72) Erfinder: BARET, Marc, 68680 Kembs (FR); EBERHARD, Holger, 70499 Stuttgart (DE); OEHME, Heiko, 07749 Jena (DE); SCHIAVI, Emilio, 4104 Oberwil (CH); WITTMER, Detlev, 75433 Maulbronn (DE); BJONNES, Hege, 4144 Arlesheim (CH); KAISER, Ulrich, 4057 Basel (CH); WIMMER, Nicolas, verstorben (DE)
(74) Vertreter: Andres, Angelika Maria
(86) Internationale Anmeldenummer: PCT/EP2018/075052
(87) Internationale Veröffentlichungsnummer: WO 2019/091641

(56) Entgegenhaltungen:
- DE-A1-102011 003 438
- DE-A1-102015 120 528
- US-A1- 2017 068 243

## Beschreibung

Die Erfindung betrifft ein Verfahren zur ortsaufgelösten Bestimmung von zumindest einer physikalischen oder chemischen Prozessgröße eines in einem Behälter angeordneten fließfähigen Mediums einer Automatisierungsanlage. Bei dem Medium handelt es sich bevorzugt um eine Flüssigkeit mit oder ohne Feststoffanteile oder um ein Gas.

In Automatisierungsanlagen, insbesondere in Anlagen der Prozessautomatisierung, werden vielfach Messgeräte zur Erfassung der unterschiedlichen Prozessgrößen eines Mediums eingesetzt. Ein Messgerät besteht üblicherweise aus zumindest einem Sensor und einer Elektronikeinheit, die die Daten des Sensors verarbeitet und Messwerte für die entsprechende Prozessgröße erzeugt. Oftmals ist ein Messgerät als Kompaktgerät ausgestaltet - hier bilden Sensor und Elektronikeinheit eine Einheit. Sensor und Elektronikeinheit können jedoch auch voneinander abgesetzt angeordnet sein. In beiden Fällen kann die Kommunikation zwischen dem Sensor und der Elektronikeinheit drahtgebunden oder drahtlos erfolgen.

Die Bestimmung der jeweiligen Prozessgröße: Füllstand, Durchfluss, Druck, Temperatur, Feuchte, pH-Wert, Leitfähigkeit, Trübung, chemische Zusammensetzung, usw. eines Mediums, das sich in einem wie auch immer gearteten Behälter (Tank, Rohrleitung, usw.) befindet, erfolgt bei den bekannten Lösungen an einem definierten Messort. Der Messort ist durch den Einbauort des Messgeräts bzw. des Sensors definiert. Folglich liefern die Sensoren Information über die Prozessgröße, die vom jeweiligen Messort und/oder aus der näheren Umgebung des jeweiligen Messortes stammt. Wird Information über die Prozessgröße von unterschiedlichen Messorten benötigt, so muss an jedem der interessierenden Messorte ein entsprechendes Messgerät bzw. ein entsprechender Sensor installiert werden. Das ist natürlich ziemlich aufwändig und entsprechend teuer.

Darüber hinaus ist es, insbesondere zur Temperaturmessung in einem Medium, bekannt geworden, als Sensorkugeln ausgestaltete Temperatursensoren dem fließfähigen Messmedium zuzusetzen. Die Sensorkugeln bewegen sich dann je nach Strömungsverhältnissen des Mediums willkürlich und zufällig in dem Medium und sammeln zu gewissen Zeitpunkten oder auch kontinuierlich Messdaten von den Messorten, an denen sie sich gerade befinden. Die Sensorkugeln werden anschließend aus dem Medium entfernt, und anhand der ausgelesenen Messdaten lässt sich z.B. ein Mittelwert für die in dem Medium herrschende Temperatur bestimmen.

Die Nachteile der bekannten Lösungen liegen auf der Hand. Bei der erstgenannten bekannten Lösung repräsentieren die Messdaten die Prozessgröße an einem oder an wenigen ausgewählten und vorgegebenen Messorten. Es bleibt offen bzw. ungewiss, ob die Werte repräsentativ für die Prozessgröße in dem Medium sind. Bei der an zweiter Stelle genannten bekannten Lösung stammen die Messdaten der Prozessgröße zwar von unterschiedlichen Messorten innerhalb des Mediums, es bleibt aber unbekannt, an welchen Messorten im Behälter die Sensorkugeln die Messdaten der Prozessgröße ermittelt haben. Neben der fehlenden Ortsinformation haben die Messdaten auch den Schwachpunkt, dass sie nicht in Echtzeit vorliegen. Insbesondere bei dynamischen Prozessen, bei denen mit schnellen Änderungen der Prozessgröße zu rechnen ist, ist auch die zweite Lösung wenig aussagekräftig, da die Messdaten stets nur Rückschlüsse auf einen in der Vergangenheit liegenden Zustand/Wert des Prozesses/der Prozessgröße anzeigen. Zu Steuerungszwecken ist die zweite Lösung nicht geeignet.

US 2017/068243 A1, DE 10 2015 120528 A1 und DE 10 2011 003438 A1 zeigen Verfahren zur ortsaufgelösten Bestimmung von Prozessgrößen eines fließfähigen Mediums.

Der Erfindung liegt die Aufgabe zugrunde, ein Verfahren vorzuschlagen, das eine ortsaufgelöste Erfassung von zumindest einer Prozessgröße eines fließfähigen Mediums ermöglicht.

Zur Lösung der Aufgabe wird ein Verfahren gemäß Anspruch 1 oder 2 vorgeschlagen, wobei das nachfolgend beschriebene System zur ortsaufgelösten Bestimmung von zumindest einer physikalischen oder chemischen Prozessgröße eines in einem Behälter angeordneten fließfähigen Mediums einer Automatisierungsanlage zum Einsatz kommt: Es ist zumindest ein Sensor vorgesehen, der im Medium und/oder im Behälter bewegbar ist und der Information über die zumindest eine Prozessgröße ermittelt. Weiterhin sind vorgesehen: eine Positionsbestimmungseinheit, die Information über die jeweils aktuelle Position des Sensors relativ zum Medium und/oder zum Behälter bereitstellt, und eine Datenübertragungseinheit, die die Information über die jeweils aktuelle Position des Sensors und die entsprechende vom Sensor bereitgestellte Information über die zumindest eine Prozessgröße sammelt und/oder an eine externe Steuereinheit und/oder Anzeigeeinheit übermittelt. Die Messdaten können alternativ als nicht-ausgewertete und unverarbeitete Roh-Messdaten oder als ausgewertete und verarbeitete Messdaten im Sensor gespeichert werden. Daher sind dem Sensor je nach Ausprägung geeignete Elektronik- und/oder Speicherkomponenten zugeordnet.

Die Übertragung der Daten erfolgt in vorgegebenen Zeitintervallen; die Messdaten können jedoch auch kontinuierlich in Echtzeit an eine externe oder in dem Behälter angeordnete Elektronikeinheit übertragen werden. Die Übertragung kann entweder drahtlos erfolgen, oder der Sensor sucht eine in dem Behälter angeordnete Elektronikeinheit auf, dockt dort an und überträgt die Daten bevorzugt drahtlos über eine kapazitive, induktive oder optische Übertragungsstrecke.

Die Vorteile des eingesetzten Systems sind darin zu sehen, dass die Information über den Wert einer Prozessgröße an jeder beliebigen und/oder gewünschten Position im Medium bzw. im Behälter vorhanden ist. Bevorzugt - falls es der Prozess erfordert - werden die Messdaten neben der Positionsangabe mit einem entsprechenden Zeitstempel versehen. Die Positionsangabe erfolgt entweder in Bezug auf das in einem Behälter befindliche Medium und/oder in Bezug auf den Behälter. Damit stehen positionsabhängige Messdaten der Prozessgröße und/oder zeitliche, positionsabhängige Verläufe der Prozessgröße im Medium zur Verfügung.

Alternativ zu der zuvor genannten Andocklösung werden die Daten in Echtzeit über eine entsprechende Funkeinrichtung, die mit dem Sensor verbunden ist, an eine Anzeige- oder Speichereinheit weitergeleitet. Je nach Anwendungsfall kann die Funkeinrichtung als Sendeeinheit oder als Sende-und Empfangseinheit ausgestaltet sein.

Werden die Messdaten z.B. für Steuerungszwecke oder für Rekalibrierungen von z.B. festinstallierten Sensoren/Messgeräten genutzt, so erfolgt eine Übertragung der Messdaten nur im Falle einer Abweichung von einem vorgegebenen Sollwert. Hierdurch wird der Energiebedarf für die Übertragung der Messdaten reduziert. Weiterhin hat diese Ausgestaltung den Vorteil, dass im Sensor/Messgerät ein entsprechend reduzierter Speicherplatz vorgehalten werden muss. Weiterhin wird eine höhere Datensicherheit erreicht, da die Messdaten ohne die Kenntnis des zugrundeliegenden Sollwertbereichs nicht interpretiert werden können. Durch diese Maßnahme lässt sich eine Verschlüsselung der Messdaten erreichen.

Das eingesetzte System hat darüber hinaus den Vorteil, dass der Installationsaufwand, der bei fest montierten Sensoren/Messgeräten erforderlich ist, eingespart wird.

Je nach Strömungsverhältnissen, die im Medium herrschen, folgt die Positionsänderung des Sensors der Bewegung des ihn umgebenden und mitbewegenden Mediums. Hierdurch ist es auch möglich, z.B. Aussagen über die Wirbelbildung bzw. die Strömungsverhältnisse im Medium zu machen. Gemäß einer vorteilhaften Ausgestaltung des im erfindungsgemäßen Verfahren eingesetzten Systems ist dem Sensor jedoch eine Antriebseinheit zugeordnet, die so ausgestaltet ist, dass sich der Sensor relativ zum Medium und/oder relativ zum Behälter an unterschiedliche Positionen bewegt bzw. dass der Sensor relativ zum Medium und/oder zum Behälter bewegbar ist. Insbesondere ist dies notwendig, wenn die Strömung im Medium näherungsweise Null ist.

Auch bei einem angetriebenen Sensor/Messgerät können die Bewegungsbahnen zufällig verlaufen; es ist jedoch auch möglich, die Bewegung des Sensors definiert zu steuern. Insbesondere ist es hierdurch möglich, dass der Sensor z.B. bevorzugt aus kritischen Bereichen des Mediums Messdaten zur Verfügung stellt.

Eine vorteilhafte Weiterbildung des im erfindungsgemäßen Verfahren eingesetzten Systems sieht vor, dass die Antriebseinheit so ausgestaltet ist, dass die benötigte Energie zur Änderung der Position und/oder zur Übertragung von Information an die externe Steuer- und/oder Anzeigeeinheit aus dem Medium und/oder aus dem Prozess, dem das Medium in dem Behälter unterzogen ist, erzeugt wird. So kann z.B. bei einem sich in Bewegung befindlichen Medium die Bewegungsenergie über einen Generator in elektrische Energie umgewandelt, die dann von dem Sensor zur Ansteuerung der unterschiedlichen Positionen innerhalb des Mediums bzw. des Behälters und/oder zur Verarbeitung und Weiterleitung der Messdaten genutzt werden kann.

Alternativ wird vorgeschlagen, dass dem Sensor eine Energiequelle mit begrenzter Kapazität oder eine aufladbare Energiequelle zur Energieversorgung zugeordnet ist. Weiterhin ist vorgesehen, dass der externen Steuer- und/oder Anzeigeeinheit eine Energiequelle mit begrenzter Kapazität oder eine aufladbare Energiequelle zur Energieversorgung zugeordnet ist.

Wie bereits zuvor erwähnt, ist der Antriebseinheit bevorzugt ein Steuerprogramm zugeordnet, wobei das Steuerprogramm so ausgestaltet ist, dass der Sensor unterschiedliche Positionen relativ zum Medium und/oder zum Behälter ansteuert. Erwähnt wurde auch schon die bevorzugte Ausgestaltung, dass dem Sensor eine Speichereinheit zugeordnet ist, in der die Information über die jeweils aktuelle Position des Sensors und die entsprechende vom Sensor bereitgestellte Information über die zumindest eine Prozessgröße zwischengespeichert wird.

Weiterhin ist die Positionsbestimmungseinheit so ausgestaltet ist, dass sie die Position des Sensors innerhalb des Behälters zumindest zu den Zeitpunkten bereitstellt und/oder speichert, wenn der Sensor die Information über die zumindest eine Prozessgröße bereitstellt. Bevorzugt - falls dies für eine genaue Bestimmung der jeweiligen Prozessgröße notwendig ist - ist dem Sensor ein Gyroskop zur Lagebestimmung des Sensors zugeordnet.

Bevorzugt wird zur Positionsbestimmung ein Triangulationsverfahren eingesetzt. Hierzu ist im oder am Behälter zumindest eine Referenzstelle vorgesehen. Über eine dreidimensionale Laufzeitmessung bevorzugt von Ultraschallwellen und mit Kenntnis der Dimensionen des Behälters (behälterinternes Bezugssystem) lässt sich die aktuelle Position des Sensors zu jedem Zeitpunkt bestimmen. Entsprechende Positionsbestimmungsein-heiten sind aus dem Stand der Technik hinlänglich bekannt. Alternativ ist es möglich, dass die Positionsbestimmung über GPS erfolgt.

Das erfindungsgemäße Verfahren gemäß Anspruch 1 weist die folgenden Verfahrensschritte auf.
- während der Inbetriebnahmephase der Automatisierungsanlage liefert der zumindest eine Sensor, der dem Medium zugesetzt ist, Information über die zumindest eine Prozessgröße von einer Vielzahl von Positionen innerhalb des Behälters und/oder des Mediums,
- anhand der Information über die zumindest eine Prozessgröße werden mehrere relevante Positionen ermittelt, bei denen die Abweichung der Informationen über die zumindest eine Prozessgröße einen vorgegebenen Schwellwert überschreitet,
- in der nachfolgenden Betriebsphase bewegt sich der Sensor bevorzugt zwischen den relevanten Positionen, um Information über die zumindest eine Prozessgröße bereitzustellen.

Darüber hinaus wird ein weiteres erfindungsgemäßes Verfahren gemäß Anspruch 2 vorgeschlagen, welches die folgenden Verfahrensschritte aufweist:
- während der Inbetriebnahmephase der Automatisierungsanlage liefert der zumindest eine Sensor Information über die zumindest eine Prozessgröße von einer Vielzahl von Positionen innerhalb des Behälters und/oder des Mediums;
- anhand der Information über die zumindest eine Prozessgröße werden mehrere relevante Positionen ermittelt, bei denen die Abweichung der Informationen über die zumindest eine Prozessgröße einen vorgegebenen Schwellwert überschreitet;
- an den relevanten Positionen werden vor Start der Betriebsphase Sensoren zur Bestimmung der zumindest einen Prozessgröße fest installiert, die in der Betriebsphase Informationen über die zumindest eine Prozessgröße bereitstellen.

Bei den relevanten Positionen handelt es sich um Positionen innerhalb des Mediums bzw. des Behälters, an denen die zu bestimmende Prozessgröße z.B. Extremwerte annimmt. Als Beispiel ist eine Destillationskolonne zu nennen. Infolge der detaillierten Kenntnis über das unterschiedliche Verhalten der Prozessgröße innerhalb des Mediums ist es möglich, die festinstallierten Sensoren/Messgeräte so auszuwählen bzw. zu parametrieren, dass sie optimal auf die Werte bzw. den Wertebereich der zu messende Prozessgröße am jeweiligen Messort ausgelegt sind.

Gemäß einer vorteilhaften Ausgestaltung des zuvor genannten Verfahrens wird darüber hinaus Folgendes vorgeschlagen:
- während der Betriebsphase wird zusätzlich zu den fest installierten Sensoren dem Medium oder dem Prozess zumindest ein Sensor zugesetzt, der so ausgestaltet sind, dass er in dem Medium oder in dem Prozess an unterschiedliche Positionen bewegt wird, wobei der bewegte Sensor bevorzugt sukzessive Positionen in der Nähe der fest installierten Sensoren ansteuert und von dort Information über die zumindest eine Prozessgröße bereitstellt;
- eine Fehlermeldung wird generiert, wenn die Abweichung der Information über die zumindest einen Prozessgröße, die von zumindest einem den fest installierten Sensoren und von dem zumindest einen bewegten Sensor bereitgestellt wird, außerhalb eines vorgegebenen Toleranzbereichs liegt.

Liegt die Abweichung zwischen den Messwerten des beweglichen Sensors und des festinstallierten Sensors außerhalb des vorgegebenen Toleranzbereichs, so erfolgt ggf. eine Rekalibrierung des festinstallierten Sensors bevorzugt über die externe Steuereinheit und/oder Anzeigeeinheit. Die Rekalibrierung kann drahtlos oder drahtgebunden erfolgen.

Eine bevorzugte Weiterbildung der beiden zuvor beschriebenen Verfahren sieht vor, dass eine Übertragung der Information über die zumindest eine Prozessgröße an die externe Steuereinheit und/oder Anzeigeeinheit bevorzugt nur dann erfolgt, wenn die Abweichung der Information über die zumindest eine Prozessgröße, die von den fest installierten Sensoren und von dem zumindest einen bewegten Sensor bereitgestellt wird, außerhalb des vorgegebenen Toleranzbereichs liegt.

Die Erfindung wird anhand der nachfolgenden Figuren näher erläutert. Es zeigt:
Fig. 1: eine schematische Darstellung einer Ausgestaltung des Systems,
Fig. 2: ein Flussdiagramm zur Visualisierung eines ersten erfindungsgemäßen Verfahrens, wobei das System zum Einsatz kommt, und
Fig. 3: ein Flussdiagramm zur Visualisierung eines zweiten erfindungsgemäßen Verfahrens, wobei das System zum Einsatz kommt.

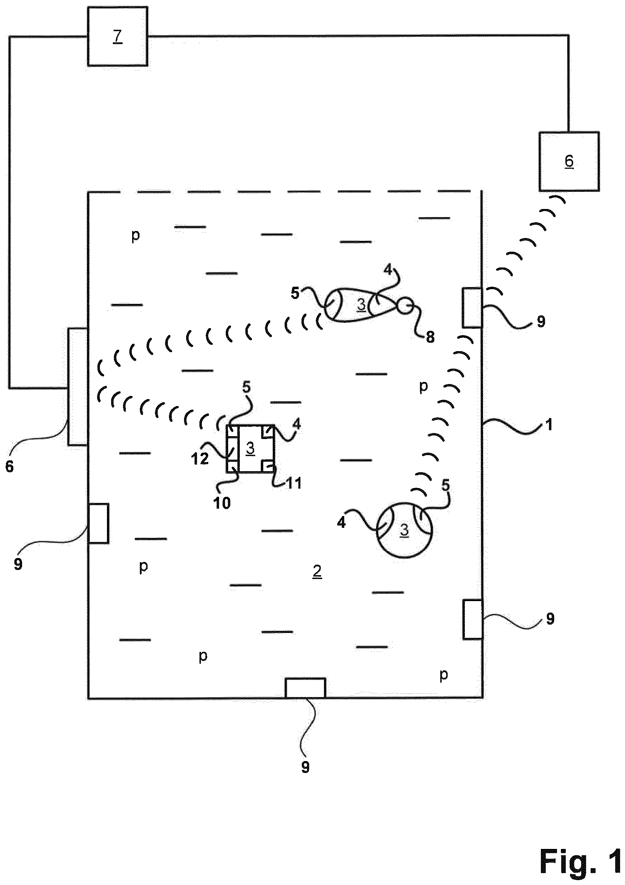

Fig. 1 zeigt eine schematische Darstellung einer Ausgestaltung des Systems zur ortsaufgelösten Bestimmung von zumindest einer physikalischen oder chemischen Prozessgröße eines in einem Behälter 1 angeordneten fließfähigen Mediums 2. Zumindest ein Sensor 3 - dargestellt sind drei Sensoren 3 - bewegen sich relativ zum Medium 2 oder relativ zum Behälter 1 und sammeln Messdaten von unterschiedlichen Positionen innerhalb des Mediums 2. Die Sensoren 3 haben ein beliebiges, bevorzugt aber ein stromlinienförmiges, Design. Sie bewegen sich entweder "frei" in dem Medium 2, d.h. sie folgen den Bewegungen, die das Medium 2 selbst durchführt, und/oder ihnen ist eine eigene Antriebseinheit 8 zugeordnet, über die die Sensoren 3 zufällige oder gesteuerte Bewegungen durchführen.

Jedem Sensor 3 ist eine Positionsbestimmungseinheit 4 zugeordnet, die Information über die jeweils aktuelle Position des Sensors 3 relativ zum Medium 2 und/oder zum Behälter 1 bereitstellt. Mittels einer Datenübertragungseinheit 5 wird die Information über die jeweils aktuelle Position des Sensors 3 und die zugehörige vom Sensor 3 bereitgestellte Information über die zumindest eine Prozessgröße erfasst/gesammelt und/oder an eine externe Steuereinheit und/oder Anzeigeeinheit 6, 7 übermittelt. Die externe Steuereinheit und/oder Anzeigeeinheit 6, 7 ist z.B. als Andockstation für die Sensoren 3 an dem Behälter 1 ausgebildet. In gewissen Zeitabständen steuern die Sensoren 3 die Andockstation 6 an, übermitteln die in einer Speichereinheit 10 gesammelten Daten, die dann eine an Anzeige-/Steuereinheit 7 weitergeleitet werden. Ggf. wird während des Andockens auch die aufladbare Energiequelle 11, die dem Sensor 3 zugeordnet ist, aufgeladen. Additiv oder alternativ funken die Sensoren 3 die Messdaten an eine externe Steuereinheit und/oder Anzeigeeinheit 6. Der stromlinienförmige Sensor 3 hat eine Antriebseinheit 8, die so ausgestaltet ist, dass der Sensor 3 seine benötigte Energie aus dem Prozess/aus dem Medium bereitbestellt bekommt. An definierten Positionen sind im Medium bzw. im Behälter festinstallierte Sensoren/Messgeräte 9 vorgesehen. Weitere vorteilhafte Ausgestaltungen des Systems sind bereits zuvor im Detail beschrieben worden.

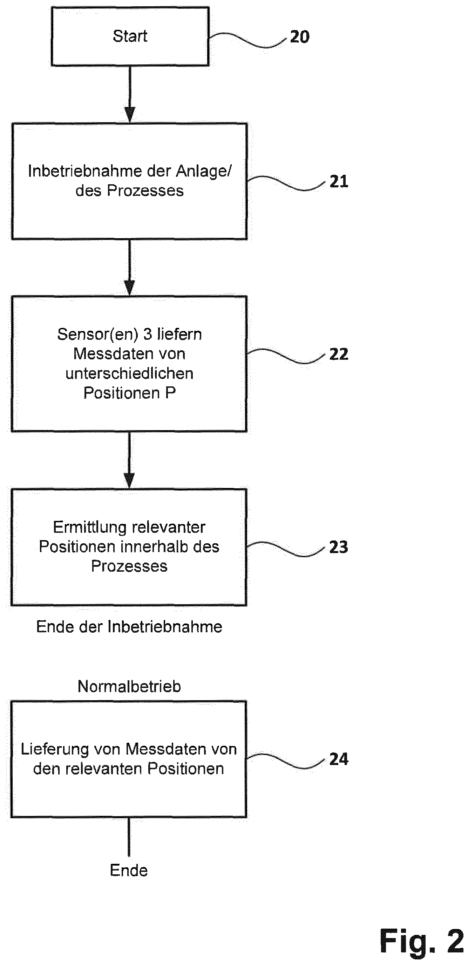

Fig. 2 zeigt ein Flussdiagramm zur Visualisierung eines ersten mit dem eingesetzten System durchführbaren erfindungsgemäßen Verfahrens zur ortsaufgelösten Bestimmung von zumindest einer physikalischen oder chemischen Prozessgröße eines in einem Behälter 1 angeordneten fließfähigen Mediums 2. Dieses Verfahren kommt insbesondere bei der Erst- oder einer nachfolgenden Inbetriebnahme des in dem Behälter stattfindenden Prozesses zum Einsatz.

Nach dem Start des Verfahrens bei Programmpunkt 20 erfolgt bei Programmpunkt 21 die Inbetriebnahme der Anlage bzw. des in dem Behälter 1 stattfindenden Prozesses. Bei Programmpunkt 22 liefert der Sensor 3 bzw. liefern die Sensoren 3 kontinuierlich oder in gewissen Zeitabständen Messdaten bezüglich der zumindest einen Prozessgröße. Da sich der Sensor 3 relativ zum Medium 2/und oder zum Behälter 1, stammen die Messdaten bezüglich der Prozessgröße von unterschiedlichen Positionen P. Die Positionen P des Sensors 3 bzw. der Sensoren 3 werden bevorzugt anhand des behälterinternen und/oder mediumsinternen Bezugssystems definiert und bestimmt. Bei Programmpunkt 23 werden anhand der bereitgestellten positionsabhängigen Messdaten von der externen Steuereinheit und/oder Anzeigeeinheit 6, 7 mehrere relevante Positionen ermittelt, bei denen z.B. die Abweichung der Messdaten der zumindest einen Prozessgröße einen vorgegebenen Schwellwert - z.B. in Relation zu einem vorgegebenen Mittelwert der Prozessgröße im Medium 2 - überschreitet. Diese Positionen P werden als kritische Positionen innerhalb des Prozesses angesehen. Während des nachfolgenden Normalbetriebs der Automatisierungsanlage - also des definierten Prozess, der in dem Behälter 1 stattfindet - bewegt sich der Sensor 3 bzw. bewegen sich die Sensoren 3 bevorzugt zwischen den relevanten Positionen, um Information über die zumindest eine Prozessgröße bereitzustellen. Dieser Schritt entspricht dem Programmpunkt 24.

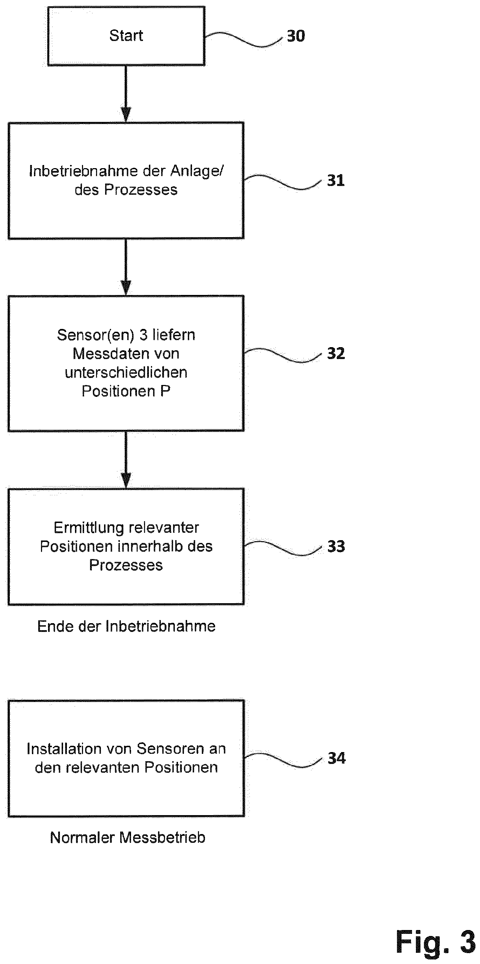

Fig. 3 zeigt ein Flussdiagramm zur Visualisierung eines zweiten mit dem System durchführbaren erfindungsgemäßen Verfahrens zur ortsaufgelösten Bestimmung von zumindest einer physikalischen oder chemischen Prozessgröße eines in einem Behälter 1 angeordneten fließfähigen Mediums 2. Die Programmpunkte 30-33 entsprechen den Programmpunkten 20-23 des zuvor beschriebenen Verfahrens, so dass auf eine Wiederholung verzichtet wird. Im Normalbetrieb - bei Programmpunkt 34 - werden hier jedoch an den in der Inbetriebnahmephase ermittelten relevanten Positionen Sensoren 3 zur Bestimmung der zumindest einen Prozessgröße fest installiert. Diese liefern nachfolgend während des Normalbetriebs der Automatisierungsanlage Information über die zumindest eine Prozessgröße, und zwar von den kritischen Positionen/Messorten innerhalb des Behälters 1/ bzw. des Prozesses (Programmpunkt 34).

### Bezugszeichenliste

- 1: Behälter
- 2: Medium
- 3: bewegter Sensor
- 4: Positionsbestimmungseinheit
- 5: Funkeinheit
- 6: externe Steuereinheit und/oder Anzeigeeinheit am Behälter
- 7: externe Steuereinheit und/oder Anzeigeeinheit abgesetzt vom Behälter
- 8: Antriebseinheit
- 9: fest installierter Sensor
- 10: Speichereinheit
- 11: Energiequelle
- 12: Gyroskop

## Patentansprüche

1. Verfahren zur ortsaufgelösten Bestimmung von zumindest einer physikalischen oder chemischen Prozessgröße eines in einem Behälter (1) angeordneten fließfähigen Mediums (2) einer Automatisierungsanlage, wobei ein System zum Einsatz kommt, wobei zumindest ein Sensor (3) vorgesehen ist, der im Medium (2) und/oder im Behälter (1) bewegbar ist und der Information über die zumindest eine Prozessgröße ermittelt, wobei eine Positionsbestimmungseinheit (4) vorgesehen ist, die Information über die jeweils aktuelle Position des Sensors (3) relativ zum Medium (2) und/oder zum Behälter bereitstellt (1), und wobei eine Datenübertragungseinheit (5) vorgesehen ist, die die Information über die jeweils aktuelle Position des Sensors (3) und die entsprechende vom Sensor (3) bereitgestellte Information über die zumindest eine Prozessgröße sammelt und/oder an eine externe Steuereinheit und/oder Anzeigeeinheit (6, 7) übermittelt, wobei das Verfahren die folgenden Verfahrensschritte aufweist:
- während der Inbetriebnahmephase der Automatisierungsanlage liefert der zumindest eine Sensor (3) Information über die zumindest eine Prozessgröße von einer Vielzahl von Positionen (P) innerhalb des Behälters (1) und/oder des Mediums (2),
- anhand der Information über die zumindest eine Prozessgröße werden mehrere relevante Positionen ermittelt, bei denen die Abweichung der Informationen über die zumindest eine Prozessgröße einen vorgegebenen Schwellwert überschreitet,
- in der nachfolgenden Betriebsphase bewegt sich der Sensor (3) bevorzugt zwischen den relevanten Positionen, um Information über die zumindest eine Prozessgröße bereitzustellen.

2. Verfahren zur ortsaufgelösten Bestimmung von zumindest einer physikalischen oder chemischen Prozessgröße eines in einem Behälter (1) angeordneten fließfähigen Mediums (2) einer Automatisierungsanlage, wobei ein System zum Einsatz kommt, wobei zumindest ein Sensor (3) vorgesehen ist, der im Medium (2) und/oder im Behälter (1) bewegbar ist und der Information über die zumindest eine Prozessgröße ermittelt, wobei eine Positionsbestimmungseinheit (4) vorgesehen ist, die Information über die jeweils aktuelle Position des Sensors (3) relativ zum Medium (2) und/oder zum Behälter bereitstellt (1), und wobei eine Datenübertragungseinheit (5) vorgesehen ist, die die Information über die jeweils aktuelle Position des Sensors (3) und die entsprechende vom Sensor (3) bereitgestellte Information über die zumindest eine Prozessgröße sammelt und/oder an eine externe Steuereinheit und/oder Anzeigeeinheit (6, 7) übermittelt, wobei das Verfahren die folgenden Verfahrensschritte aufweist:
- während der Inbetriebnahmephase der Automatisierungsanlage liefert der zumindest eine Sensor (3) Information über die zumindest eine Prozessgröße von einer Vielzahl von Positionen (P) innerhalb des Behälters (1) und/oder des Mediums (2),
- anhand der Information über die zumindest eine Prozessgröße werden mehrere relevante Positionen ermittelt, bei denen die Abweichung der Informationen über die zumindest eine Prozessgröße einen vorgegebenen Schwellwert überschreitet,
- an den relevanten Positionen werden vor Start der Betriebsphase Sensoren (3) zur Bestimmung der zumindest einen Prozessgröße fest installiert, die in der Betriebsphase Informationen über die zumindest eine Prozessgröße bereitstellen.

3. Verfahren nach Anspruch 2,
- wobei während der Betriebsphase zusätzlich zu den fest installierten Sensoren (9) dem Medium (2) oder dem Prozess zumindest ein Sensor (3) zugesetzt wird, der so ausgestaltet ist, dass er in dem Medium (2) oder in dem Prozess an unterschiedliche Positionen (P) bewegt wird, wobei der bewegte Sensor (3) bevorzugt sukzessive Positionen in der Nähe der fest installierten Sensoren (9) anfährt und Information über die zumindest eine Prozessgröße bereitstellt, und
- wobei eine Fehlermeldung generiert wird, wenn die Abweichung der Information über die zumindest einen Prozessgröße, die von den fest installierten Sensoren (9) und von dem zumindest einen bewegten Sensor (3) bereitgestellt wird, außerhalb eines vorgegebenen Toleranzbereichs liegt.

4. Verfahren nach Anspruch 1, 2 oder 3,
wobei eine Übertragung der Information über die zumindest eine Prozessgröße an die externe Steuereinheit und/oder Anzeigeeinheit (7) bevorzugt nur dann erfolgt, wenn die Abweichung der Information über die zumindest eine Prozessgröße, die von den fest installierten Sensoren (9) und von dem zumindest einen bewegten Sensor (3) bereitgestellt wird, außerhalb des vorgegebenen Toleranzbereichs liegt.

5. Verfahren nach zumindest einem der Ansprüche 1-4,
wobei sich der Sensor (3) mittels einer Antriebseinheit (8) relativ zum Medium (2) und/oder relativ zum Behälter (1) an unterschiedliche Positionen (P) bewegt.

6. Verfahren nach Anspruch 5,
wobei die Antriebseinheit (8) die benötigte Energie zur Änderung der Position und/oder zur Übertragung von Information an die externe Steuer- und/oder Anzeigeeinheit (6; 7) aus dem Medium (2) und/oder aus dem Prozess, dem das Medium (2) in dem Behälter (1) unterzogen ist, generiert.

7. Verfahren nach zumindest einem der Ansprüche 1-6,
wobei eine Energiequelle mit begrenzter Kapazität oder eine aufladbare Energiequelle zur Energieversorgung des Systems oder von im Behälter (1) vorgesehenen Komponenten des Systems eingesetzt wird.

8. Verfahren nach zumindest einem der Ansprüche 1-7,
wobei der externen Steuer- und/oder Anzeigeeinheit (6; 7) eine Energiequelle mit begrenzter Kapazität oder eine aufladbare Energiequelle zur Energieversorgung zugeordnet wird.

9. Verfahren nach zumindest einem der Ansprüche 5-8,
wobei der Sensor (3) mittels eines der Antriebseinheit (8) zugeordnetem Steuerprogramms unterschiedliche Positionen (P) relativ zum Medium (2) und/oder zum Behälter (1) ansteuert.

10. Verfahren nach zumindest einem der Ansprüche 1-9,
wobei in einer dem Sensor (3) zugeordneten Speichereinheit (10) die Information über die jeweils aktuelle Position des Sensors (3) und die entsprechende vom Sensor (3) bereitgestellte Information über die zumindest eine Prozessgröße zwischengespeichert wird.

11. Verfahren nach zumindest einem der Ansprüche 1-10,
wobei die Positionsbestimmungseinheit (4) die Position des Sensors (3) innerhalb des Mediums (2) und/oder des Behälters (1) zumindest zu den Zeitpunkten bereitstellt und/oder speichert, wenn der Sensor (3) die Information über die zumindest eine Prozessgröße bereitstellt.

12. Verfahren nach zumindest einem der Ansprüche 1-11,
wobei ein Gyroskop (12) zur Lagebestimmung des Sensors (3) eingesetzt wird.

13. Verfahren nach zumindest einem der Ansprüche 1-12,
wobei die Positionsbestimmungseinheit (4) die aktuelle Position des Sensors (3) über ein Triangulationsverfahren ermittelt.

## Claims

1. Procedure for the spatially resolved determination of at least a physical or chemical process variable of a fluid medium (2) arranged in a vessel (1) of an automation system, wherein a system is used in which at least a sensor (3) is provided which can be moved in the medium (2) and/or in the vessel (1) and which determines information about the at least one process variable,
wherein a position determination unit (4) is provided which provides information about the current respective position of the sensor (3) in relation to the medium (2) and/or the vessel (1), and wherein a data transmission unit (5) is provided which collects information about the current respective position of the sensor (3) and the corresponding information, provided by the sensor (3), about the at least one process variable and/or transmits the information to an external control unit and/or display unit (6, 7), wherein the procedure comprises the following procedural steps:
- during the commissioning phase of the automation system, the at least one sensor (3) provides information about the at least one process variable from a multitude of positions (P) in the vessel (1) and/or the medium (2),
- on the basis of the information about the at least one process variable, several relevant positions are determined at which the deviation of the information about the at least one process variable exceeds a predefined threshold value,
- in the subsequent operating phase, the sensor (3) preferably moves between the relevant positions to provide information about the at least one process variable.

2. Procedure for the spatially resolved determination of at least a physical or chemical process variable of a fluid medium (2) arranged in a vessel (1) of an automation system, wherein a system is used in which at least a sensor (3) is provided which can be moved in the medium (2) and/or in the vessel (1) and which determines information about the at least one process variable,
wherein a position determination unit (4) is provided which provides information about the current respective position of the sensor (3) in relation to the medium (2) and/or the vessel (1), and wherein a data transmission unit (5) is provided which collects information about the current respective position of the sensor (3) and the corresponding information, provided by the sensor (3), about the at least one process variable and/or transmits the information to an external control unit and/or display unit (6, 7), wherein the procedure comprises the following procedural steps:
- during the commissioning phase of the automation system, the at least one sensor (3) provides information about the at least one process variable from a multitude of positions (P) in the vessel (1) and/or the medium (2),
- on the basis of the information about the at least one process variable, several relevant positions are determined at which the deviation of the information about the at least one process variable exceeds a predefined threshold value,
- sensors (3) to determine the at least one process variable are permanently installed at the relevant positions before the operating phase starts, wherein said sensors make information available about the at least one process variable during the operating phase.

3. Procedure as claimed in Claim 2,
- wherein, in addition to the permanently installed sensors (9), at least one sensor (3) is added to the medium (2) or the process during the operating phase, wherein said sensor is designed to be moved to different positions (P) in the medium (2) or in the process, wherein the moved sensor (3) preferably approaches consecutive positions near the permanently installed sensors (9) and provides information about the at least one process variable, and
- wherein an error message is generated if the deviation of the information about the at least one process variable which is provided by the permanently installed sensors (9) and by the at least one mobile sensor (3) is outside a predefined tolerance range.

4. Procedure as claimed in Claim 1, 2 or 3,
wherein information about the at least one process variable is preferably only transmitted to the external control unit and/or display unit (7) if the deviation of the information about the at least one process variable, which is provided by the permanently installed sensors (9) and by the at least one mobile sensor (3) is outside the predefined tolerance range.

5. Procedure as claimed in at least one of the Claims 1 to 4,
- wherein le sensor (3) is moved to different positions (P) in relation to the medium (2) and/or in relation to the vessel (1) by means of a drive unit (8).

6. Procedure as claimed in Claim 5,
wherein the drive unit (8) generate the necessary energy to change the position and/or to transmit information to the external control unit and/or display unit (6, 7) from the medium (2) and/or from the process to which the medium (2) in the vessel (1) is subjected.

7. Procedure as claimed in at least one of the Claims 1 to 6,
wherein an energy source with limited capacity or a rechargeable energy source is used to supply power to the system or to system components provided in the vessel (1).

8. Procedure as claimed in at least one of the Claims 1 to 7,
wherein the external control unit and/or display unit (6, 7) is assigned an energy source with limited capacity or a rechargeable energy source for the purpose of energy supply.

9. Procedure as claimed in at least one of the Claims 5 to 8,
wherein the sensor (3) goes to different positions (P) in relation to the medium (2) and/or vessel (1) using a control program assigned to the drive unit (8).

10. Procedure as claimed in at least one of the Claims 1 to 9,
wherein the information about the current respective position of the sensor (3) and the corresponding information provided by the sensor (3) about the at least one process variable is stored temporarily in a memory unit (10) assigned to the sensor (3).

11. Procedure as claimed in at least one of the Claims 1 to 10,
wherein the position determination unit (4) provides and/or saves the position of the sensor (3) in the medium (2) and/or the vessel (1) at least at the times when the sensor (3) provides the information about the at least one process variable.

12. Procedure as claimed in at least one of the Claims 1 to 11,
wherein a gyroscope (12) is used to determine the position of the sensor (3).

13. Procedure as claimed in at least one of the Claims 1 to 12,
wherein the position determination unit (4) determines the current position of the sensor (3) by means of a triangulation method.

## Revendications

1. Procédé destiné à la détermination par résolution spatiale d'au moins une grandeur de process physique ou chimique d'un produit fluide (2) disposé dans un réservoir (1) d'une installation d'automatisation, procédé pour lequel on utilise un système dans lequel il est prévu au moins un capteur (3) pouvant être déplacé dans le produit (2) et/ou dans le réservoir (1) et qui détermine des informations sur l'au moins une grandeur de process, une unité de détermination de position (4) étant prévue, laquelle unité met à disposition des informations sur la position actuelle respective du capteur (3) par rapport au produit (2) et/ou au réservoir (1), et une unité de transmission de données (5) étant prévue, laquelle unité collecte les informations sur la position actuelle respective du capteur (3) et les informations correspondantes mises à disposition par le capteur (3) sur l'au moins une grandeur de process et/ou les transmet à une unité externe de commande et/ou d'affichage (6, 7), le procédé comprenant les étapes de procédé suivantes :
- pendant la phase de mise en service du système d'automatisation, l'au moins un capteur (3) fournit des informations sur l'au moins une grandeur de process à partir d'une multiplicité de positions (P) à l'intérieur du réservoir (1) et/ou du produit (2),
- sur la base des informations sur l'au moins une grandeur de process, une pluralité de positions pertinentes sont déterminées pour lesquelles l'écart des informations sur l'au moins une grandeur de process dépasse une valeur seuil prédéfinie,
- dans la phase de fonctionnement suivante, le capteur (3) se déplace de préférence entre les positions pertinentes afin de mettre à disposition des informations sur l'au moins une grandeur de process.

2. Procédé destiné à la détermination par résolution spatiale d'au moins une grandeur de process physique ou chimique d'un produit fluide (2) disposé dans un réservoir (1) d'une installation d'automatisation, procédé pour lequel on utilise un système dans lequel il est prévu au moins un capteur (3) pouvant être déplacé dans le produit (2) et/ou dans le réservoir (1) et qui détermine des informations sur l'au moins une grandeur de process, une unité de détermination de position (4) étant prévue, laquelle unité met à disposition des informations sur la position actuelle respective du capteur (3) par rapport au produit (2) et/ou au réservoir (1), et une unité de transmission de données (5) étant prévue, laquelle unité collecte les informations sur la position actuelle respective du capteur (3) et les informations correspondantes mises à disposition par le capteur (3) sur l'au moins une grandeur de process et/ou les transmet à une unité de commande et/ou une unité d'affichage externe(s) (6, 7), le procédé comprenant les étapes de procédé suivantes :
- pendant la phase de mise en service du système d'automatisation, l'au moins un capteur (3) fournit des informations sur l'au moins une grandeur de process à partir d'une multiplicité de positions (P) à l'intérieur du réservoir (1) et/ou du produit (2),
- sur la base des informations sur l'au moins une grandeur de process, une pluralité de positions pertinentes sont déterminées pour lesquelles l'écart des informations sur l'au moins une grandeur de process dépasse une valeur seuil prédéfinie,
- des capteurs (3) destinés à déterminer l'au moins une grandeur de process sont installés de manière permanente aux positions pertinentes avant le début de la phase de fonctionnement, lesquels capteurs mettent à disposition des informations sur l'au moins une grandeur de process pendant la phase de fonctionnement.

3. Procédé selon la revendication 2,
- pour lequel, pendant la phase de fonctionnement, en plus des capteurs (9) installés de manière permanente, au moins un capteur (3) est ajouté au produit (2) ou au process, lequel capteur est conçu de telle sorte qu'il est déplacé vers différentes positions (P) dans le produit (2) ou dans le process, le capteur (3) déplacé approchant de préférence des positions successives à proximité des capteurs (9) installés de manière permanente et mettant à disposition des informations sur l'au moins une grandeur de process, et
- pour lequel un message d'erreur est généré si l'écart des informations sur l'au moins une grandeur de process mises à disposition par les capteurs (9) installés de manière permanente et par l'au moins un capteur (3) mobile se trouve en dehors d'une plage de tolérance prédéfinie.

4. Procédé selon la revendication 1, 2 ou 3,
pour lequel une transmission de l'information sur l'au moins une grandeur de process à l'unité externe de commande et/ou d'affichage (7) n'a lieu de préférence que si l'écart de l'information sur l'au moins une grandeur de process, qui est mise à disposition par les capteurs (9) installés de manière permanente et par l'au moins un capteur (3) mobile, se situe en dehors de la plage de tolérance prédéfinie.

5. Procédé selon au moins l'une des revendications 1 à 4,
- pour lequel le capteur (3) se déplace dans différentes positions (P) par rapport au produit (2) et/ou par rapport au réservoir (1) au moyen d'une unité d'entraînement (8).

6. Procédé selon la revendication 5,
pour lequel l'unité d'entraînement (8) génère l'énergie nécessaire pour modifier la position et/ou pour transmettre des informations à l'unité externe de commande et/ou d'affichage (6, 7) à partir du produit (2) et/ou du process auquel est soumis le produit (2) dans le réservoir (1).

7. Procédé selon au moins l'une des revendications 1 à 6,
pour lequel une source d'énergie à capacité limitée ou une source d'énergie rechargeable est utilisée pour fournir de l'énergie au système ou à des composants du système prévus dans le réservoir (1).

8. Procédé selon au moins l'une des revendications 1 à 7,
pour lequel l'unité externe de commande et/ou d'affichage (6, 7) est associée, pour l'alimentation en énergie, à une source d'énergie à capacité limitée ou à une source d'énergie rechargeable.

9. Procédé selon au moins l'une des revendications 5 à 8,
pour lequel le capteur (3) commande différentes positions (P) par rapport au produit (2) et/ou au réservoir (1) au moyen d'un programme de commande affecté à l'unité d'entraînement (8).

10. Procédé selon au moins l'une des revendications 1 à 9,
pour lequel les informations sur la position actuelle respective du capteur (3) et les informations correspondantes mises à disposition par le capteur (3) sur l'au moins une grandeur de process sont stockées temporairement dans une unité de mémoire (10) associée au capteur (3).

11. Procédé selon au moins l'une des revendications 1 à 10,
pour lequel l'unité de détermination de position (4) met à disposition et/ou enregistre la position du capteur (3) à l'intérieur du produit (2) et/ou du réservoir (1) au moins aux instants où le capteur (3) met à disposition l'information sur l'au moins une grandeur de process.

12. Procédé selon au moins l'une des revendications 1 à 11,
pour lequel un gyroscope (12) est utilisé pour déterminer la position du capteur (3).

13. Procédé selon au moins l'une des revendications 1 à 12,
pour lequel l'unité de détermination de position (4) détermine la position actuelle du capteur (3) par une méthode de triangulation.
